**Europäisches Patentamt**

**European Patent Office**

**Office européen des brevets**

(19)

(11) Veröffentlichungsnummer: **0 071 971**
**B1**

(12) # EUROPÄISCHE PATENTSCHRIFT

(45) Veröffentlichungstag der Patentschrift:
**11.06.86**

(51) Int. Cl.⁴: **G 01 N 27/56**

(21) Anmeldenummer: **82107018.2**

(22) Anmeldetag: **04.08.82**

(54) Eletrochemische Messvorrichtung.

(30) Priorität: **06.08.81 DE 3131103**

(43) Veröffentlichungstag der Anmeldung:
**16.02.83 Patentblatt 83/7**

(45) Bekanntmachung des Hinweises auf die Patenterteilung:
**11.06.86 Patentblatt 86/24**

(84) Benannte Vertragsstaaten:
**AT CH FR GB IT LI NL SE**

(56) Entgegenhaltungen:
**DE - A - 2 736 451**
**DE - A - 2 946 775**
**FR - A - 2 449 887**
**GB - A - 2 054 868**
**GB - A - 2 067 294**
**US - A - 3 928 161**
**US - A - 4 253 302**

(73) Patentinhaber: **BROWN, BOVERI & CIE
Aktiengesellschaft, Kallstadter Strasse 1,
D-6800 Mannheim 31 (DE)**

(72) Erfinder: **Rohr, Franz-Josef, Dr., Forstweg 2,
D-6941 Abtsteinach (DE)**
Erfinder: **Chu, Wing Fong, Dr. Dipl.-Chem., Falkenseiner
Strasse 61, D-6000 Frankfurt (DE)**
Erfinder: **Böhm, Robert, Im Buschgewann 81,
D-6900 Heidelberg 1 (DE)**

(74) Vertreter: **Kempe, Wolfgang, Dr. et al, c/o Brown, Boveri
& Cie AG Postfach 351, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektrochemische Meßvorrichtung für die Bestimmung des Sauerstoffgehaltes in Gasen, mit mindestens einem mit einer Heizung versehenen Festelektrolyten, der mit Elektroden versehen ist, von denen wenigstens eine Elektrode vom Meßgas beaufschlagbar ist, in dessen Weg wenigstens eine durch die Heizung erwärmbare und durch Diffusion durchdringbare Barriere angeordnet ist, die an einen durch eine Zuflußleitung mit der Meßstelle verbundenen Meßgasraum grenzt und die die Zufuhr des Meßgases zur Elektrode derart begrenzt, daß die Elektrode den gesamten Sauerstoffanteil des Meßgases extrahieren kann, wobei dieser Sauerstoff mit Hilfe eines elektrischen Stromes durch den Festelektrolyten zu einer zweiten Elektrode transportierbar und der hierbei fließende elektrische Strom als Maß für den Sauerstoffgehalt des Meßgases erfaßbar ist.

Bei einer bekannten Meßvorrichtung dieser Art besteht die Barriere aus einem porösen Überzug, der auf der vom Meßgas beaufschlagten Elektrode angeordnet ist (DE-A-29 46 775). Da das Meßgas die Barriere lediglich durch Diffusion durchdringen kann, läßt sich hierdurch der Zustrom des Meßgases zur Elektrode begrenzen. Durch geeignete Auswahl des Materials bzw. Porosität kann hierbei der Zustrom derart begrenzt werden, daß die Elektrode in der Lage ist, den gesamten Sauerstoffanteil aus dem zugeführten Meßgas zu extrahieren und mit Hilfe eines elektrischen Stromes zur gegenüberliegenden Elektrode zu transportieren. Die Stromstärke ist hierbei ein Maß für den Sauerstofftransport und somit für den Sauerstoffanteil des Meßgases. Die für diesen Vorgang erforderliche Mindesttemperatur des Festelektrolyten liegt ungefähr bei 400 Grad Celsius.

Im Langzeitbetrieb solcher Meßvorrichtungen sind Verschmutzungen und/oder Alterungen der Barrieren mit der Folge einer Verringerung der Gasdiffusion nicht zu vermeiden, so daß bei bekannten Meßvorrichtungen der gesamte Festelektrolyt ausgetauscht werden muß. Dies ist jedoch sehr aufwendig. Zudem vergrößert die als Schicht mit einer Dicke bis zu 5 mm aufgebrachte Barriere die Aufheizzeit der Meßzelle auf mehrere Minuten, selbst bei Temperaturen der Heizung von 700 bis 900 Grad Celsius. Dies ist insbesondere beim Einsatz der Meßvorrichtung zur Überwachung der Gemischbildung von Verbrennungsmotoren oder Feuerungen ungünstig. Da die Barriere bzw. die die Barriere tragende Elektrode nicht unmittelbar an der eigentlichen Meßstelle, sondern in einem separaten Meßgasraum angeordnet ist, der nur durch eine im Verhältnis zum Querschnitt des Meßgasraumes dünne Zuflußleitung mit der Meßstelle verbunden ist, kühlen selbst heiße Meßgase auf dem Weg zum Meßgasraum soweit ab, daß eine wesentliche Aufheizung der Barriere durch das Meßgas bzw. eine Beschleunigung der Aufheizung nicht stattfindet.

Eine andere bekannte Sauerstoffmeßzelle, die nach dem potentiometrischen Prinzip arbeitet, ist unmittelbar an der Meßstelle im Meßgasstrom angeordnet (US-A-39 28 161). Der Meßelektrode ist hierbei ein poröses Schutzglied vorgeschaltet, das als Meßgasfilter dient. Eine Beheizung des Schutzgliedes durch die Meßzellenheizung ist konstruktionsbedingt weitgehend ausgeschlossen, seine Temperatur wird nur von der Temperatur des Meßgases bestimmt.

Desweiteren ist eine potentiometrische elektrochemische Meßzelle zur Sauerstoffmessung bekannt, deren Meßelektrode eine Vorsatzkammer aufweist (DE-A-27 36 451). Die Vorsatzkammer kann von einer porösen Membran begrenzt sein, die genügend Durchlaßwege für das Meßgas bietet. Der Zweck der Vorsatzkammer besteht darin, einen begrenzten Baum zu schaffen, dem Sauerstoff zum Schutz der Meßelektrode vor Sulfidierung zugeführt werden kann. Die Vorsatzkammer ist an der Meßstelle im Meßgasstrom angeordnet und nimmt daher dessen Temperatur an.

Schließlich ist in der US-A-42 53 302 ein elektrochemischer Meßfühler gezeigt und beschrieben, der nach dem potentiometrischen Prinzip arbeitet. Der Meßfühler ist von einer mit Abstand verlaufenden Katalysatorschicht umgeben, die den Meßfühler für die Überwachung des Abgases von Verbrennungsmotoren geeigneter macht.

Der Erfindung lag daher die Aufgabe zugrunde, eine elektrochemische Meßvorrichtung der eingangs genannten Art anzugeben, die verringerte Ansprechzeit mit geringen Betriebskosten und langer Lebensdauer verbindet. Darüber hinaus soll die Meßvorrichtung für alle Anwendungsbereiche geeignet und den betrieblichen Anforderungen voll gewachsen sein.

Die Lösung dieser Aufgabe besteht nun erfindungsgemäß darin, daß die Barriere als selbständiges Bauelement ausgebildet, leicht austauschbar, durch mindestens den Festelektrolyten sowie mindestens einen zweiten Zwischenraum von der Heizung getrennt und auf eine Temperatur unterhalb der Festelektrolyt-Temperatur, vorzugsweise auf höchstens 300° Celsius, aufheizbar ist.

Die Ausbildung der Barriere lösgelöst vom Festelektrolyten als selbständiges Bauelement senkt die Kosten der Meßzelle sowie die Betriebskosten, da diese je nach Bedarf unabhängig vom Festelektrolyten ausgewechselt werden kann. Hierbei ist die leicht austauschbare Fixierung in der Meßvorrichtung von besonderer Bedeutung. Als sehr wesentlicher Vorteil ist hier anzuführen, daß durch die räumliche Trennung von Festelektrolyt und Barriere die Aufheizgeschwindigkeit des Festelektrolyten ohne zusätzliche Energie gesteigert und die Ansprechgeschwindigkeit der Meßvorrichtung somit wesentlich verbessert werden kann. Da hierbei die Barriere in einem solchen Bereich der Meßvorrichtung angeordnet ist, der nur indirekt von der Heizung beaufschlagt wird, das heißt, die Barriere ist mindestens durch den Festelektrolyten und mindestens einen Zwischenraum von der Heizung getrennt, ist die Betriebstemperatur der Barriere geringer als die des Festelektrolyten, die mindestens 400 Grad Celsius beträgt. Hierdurch ist die Anzahl der Stoffe, die als Barriere eingesetzt werden können erheblich vergrößert, so daß die Auswahlmöglichkeit bezüglich eines speziellen Anwendungsfalles und/oder zur Verringerung der Kosten erweitert ist.

Durch die geringe Betriebstemperatur der Barriere ist auch die temperaturabhängige Diffusionsgeschwindigkeit verringert, so daß trotz gegebenenfalls dünner, großflächiger und somit gegen Verschmutzungen unempfindlicher Barrieren ein geringer Gasdurchlaß stattfindet. Es kann daher eine im Verhältnis kleinere Elektroden-Elektrolyt-Einheit verwendet werden ohne befürchten zu müssen, daß dieser Einheit zuviel Meßgas zugeführt wird, denn das Meßgas muß während des Meßvorgangs vollständig von der einen Elektrode durch den Festelektrolyten zur anderen Elektrode transportiert werden.

Hierbei kann durch entsprechende Dimension des Zwischenraums bzw. des Abstandes zwischen Festelektrolyt und Barriere und durch entsprechende Ausbildung der Wärmebrücken die Temperatur der Barriere festgelegt und z.B. auf die Hälfte der Festelektrolyt-Temperatur, das heißt auf ca. 200 Grad Celsius begrenzt werden. Die Begrenzung der Temperatur ermöglicht den Einsatz von Kunststoff als Material für die Barriere, da dieser meist nur bis ungefähr 300 Grad Celsius einsetzbar ist.

Als Material für die Herstellung der Barriere ist jedes Material geeignet das den Sauerstoffanteil des Meßgases durch Diffusion durchtreten läßt und den Temperaturverhältnissen sowie der Meßgasatmosphäre gewachsen ist, vorteilhaft ist es jedoch, die Barriere aus oxidischem Keramikmaterial herzustellen. Dieses Material läßt sich leicht in den gewünschten Formen wie Scheiben oder Bohren herstellen. Die Porosität und/oder die Wandstärke dieser Teile ist hierbei auf den Einzelfall abzustimmen, Dicken bis zu 6 mm haben sich durchaus bewährt. Meßzellen, bei denen die Barriere ein Material der Formel $2(Mg_{0,96}Fe_{0,04}).O.SiO_2$ oder $Al_2 Si_4 O_{10}$ enthält, haben sich durch gute Eigenschaften ausgezeichnet.

Eine andere bevorzugte Weiterbildung der Erfindung kann auch darin bestehen, daß die Barriere im wesentlichen aus Kunststoff, vorzugsweise in Form einer Folie, besteht. Hierbei hat es sich als empfehlenswert erwiesen, wenn die Barriere wenigstens ein Material aus der Gruppe Polytetrafluorethylen, Polybutadien, Ethylen-Propylen oder Silikon-Gummi enthält. Diese Stoffe lassen sich insbesondere in Form von Folien verwenden, die wegen ihrer geringen Dicke von ca. 0,1 bis 1 mm selbst bei niedrigen Temperaturen von etwa 100 bis 200 Grad Celsius ausreichende Diffusion gewährleisten.

Vorteilhaft besteht die Barriere aus einer Wand, die auf der einen Seite unter Bildung des zweiten Zwischenraumes mit Abstand zum Festelektrolyten verläuft und auf der anderen Seite an den Meßgasraum grenzt. Hierdurch wird einfache Ausbildung mit sicherer Temperaturbegrenzung vereint.

Besitzt die Meßvorrichtung einen scheibenförmigen, ebenen Festelektrolyten so empfiehlt es sich daß die Wand ehenfalls scheibenförmig und eben ausgebildet und etwa parallel zum Festelektrolyten angeordnet ist. Dies ergibt einen einfachen, übersichtlichen Aufbau.

Weist die Meßvorrichtung einen rohrförmigen, an einem Ende mit einer Kuppe verschlossenen Festelektrolyten auf, so ergibt sich dann ein vorteilhafter einfacher Aufbau, wenn die Barriere eben und scheibenförmige ausgebildet ist und mit axialem Abstand quer, vorzugsweise senkrecht zur Längsachse, verläuft.

Eine andere empfehlenswerte Weiterbildung der Erfindung für eine Meßvorrichtung mit einem rohrförmigen Festelektrolyten kann auch darin bestehen, daß die Barriere rohrförmig ausgebildet und konzentrisch zum Festelektrolyten angeordnet ist.

Im folgenden wird die Erfindung anhand von lediglich Ausführungswege darstellenden Zeichnungen näher erläutert.

Es zeigt:

Fig. 1 einen vertikalen Zentralschnitt durch eine Meßvorrichtung gemäß der Erfindung mit einem ebenen Festelektrolyten und einer Barriere in Form einer ebenen Wand,

Fig. 2 einen vertikalen Längsschnitt durch eine Ausführungsvariante des Gegenstands der Erfindung mit einem rohrförmigen und einseitig kuppenartig verschlossenen Festelektrolyten und einer Barriere in Form einer ebenen Wand,

Fig. 3 eine Ausführungsvariante des Gegenstands der Fig. 2 mit einer den Festelektrolyten ringzylindrisch umgebenden Barriere,

Fig. 4 eine weitere Ausführungsvariante des Gegenstands der Erfindung mit ringzylindrischem Festelektrolyten und ringzylindrischer Barriere und

Fig. 5 einen vertikalen Zentralschnitt durch eine Doppelzelle mit ebenen Festelektrolyten.

Gleiche Teile sind in den einzelnen Figuren mit den gleichen Bezugszeichen versehen. Ferner sind in den einzelnen Figuren wiederkehrende Einzelteile nur in soweit mit Bezugzeichen versehen, als dies für das Verständnis erforderlich ist.

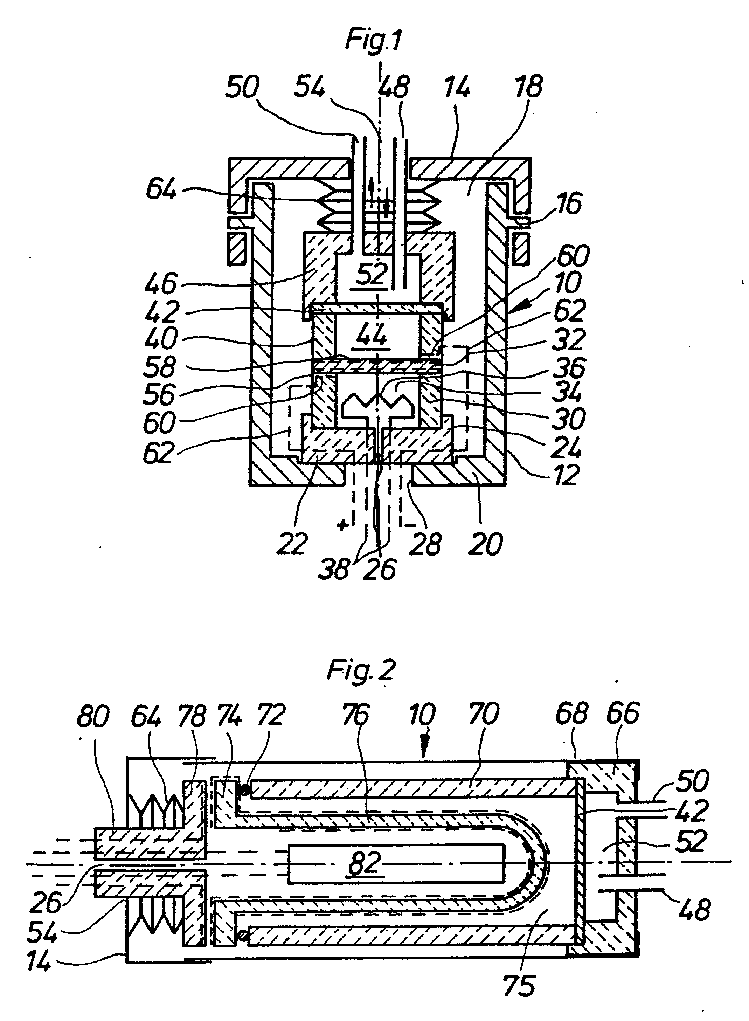

Die in Fig. 1 dargestellte elektrochemische Meßvorrichtung weist ein Gehäuse 10 aus Stahl auf, dessen Unterteil 12 topfförmig ausgebildet und durch einen Deckel 14 verschlossen ist, der den oberen Bereich des Unterteils 12 umgreift und durch einen angedeuteten Schnellverschluß, z. B. in Form einer Bajonettverschlusses 18, fixiert ist. Der Deckel 14 könnte jedoch auch mit dem Unterteil 12 verschraubt sein, z. B. mit leicht lösbaren Flügelschrauben.

Im Innenraum 18 des Gehäuses ist auf dem Boden 20 ein kreisförmiger Trägerkörper 22 aus gasdichtem keramischen Material angeordnet, der einen peripher umlaufenden nach oben vorspringenden ZentrierTand 24 aufweist. Der Trägerkörper 22 weist noch eine axial verlaufende, ungefähr zentrische Entlüftungsöffnung 26 auf, die über eine Öffnung 28 des Bodens 20 in den Außenraum mündet.

Auf dem Trägerkörper 22 stützt sich ein vom Zentrierrand geführter ringzylindrischer Zwischenkörper 30 ab, auf dem der kreisscheibenförmige Festelektrolyt 32 angeordnet ist, so daß ein Zwischenraum 34 entsteht, in dem die elektrische Heizung 36 in Form einer Heizspirale angeordnet ist. Die elektrischen Anschlüsse 38 der Heizspirale sind nach unten geführt, durchdringen den Trägerkörper 22 und erreichen durch die Öffnung 28 den Außenraum. Diese elektrischen Anschlüsse sind mit gestrichelten Linien dargestellt.

Auf dem Festelektrolyten 32 ist ein zweiter Zwischenkörper 40 zentrisch angeordnet, der ungefähr identisch ausgebildet ist mit dem Zwischenkörper 30. Den oberen Abschluß des zweiten Zwischenkörpers 40 bildet die Barriere 42, so daß zwischen Festelektrolyt 32 und Barriere 42 ein zweiter Zwischenraum 44 gebildet ist.

Die Barriere 42 weist die Form einer Kreisscheibe auf und sie besteht entweder aus keramischem porösen Material oder aus Kunststoff, insbesondere in Form einer Folie.

Auf der Barriere 42 ist schließlich ein hutförmiger Abschlußkörper 46 angeordnet, dessen peripherer unterer Band die Barriere 42 und den zweiten Zwischenkörper 40 zur Zentrierung umgreift. Der zweite Zwischenkörper 40 besteht ebenso wie der Abschlußkörper 46 aus gasdichtem keramischen Material. Der Deckel des Abschlußkörpers 46 weist jeweils eine axial verlaufende Zuflußleitung 48 und Abflußleitung 50 auf. Diese verbinden den innerhalb des Abschlußkörpers 46 gebildeten Meßgasraum 52 mit dem Außenraum bzw. der Meßstelle, wobei die Leitungen 48, 50 durch eine im Deckel 14 etwa zentrisch angeordnete Öffnung 54 geführt sind.

Zwischen dem Abschlußkörper 46 und dem Deckel 14 sind Tellerfedern 64 angeordnet, deren Anzahl und Federcharakteristik so ausgewählt ist, daß bei verschlossenem Gehäuse 10 der Trägerkörper 22, der Zwischenkörper 30, der Festelektrolyt 32, der zweite Zwischenkörper 40, die Barriere 42 und der Abschlußkörper 46 gasdicht aufeinander gepreßt werden.

Der scheibenförmige Festelektrolyt 32 ist auf den beiden gegenüberliegenden Flächen mit Elektroden 56, 58 versehen. Zur Abnahme des elektrischen Signals von diesen Elektroden sind an den Stirnflächen der Zwischenkörper Kontaktflächen 60 vorgesehen, die jeweils mit einer Elektrode 56, 58 in Berührung stehen und die mit gestrichelt dargestellten elektrischen Leitungen 62 mit dem Außenraum verbunden sind. Hierbei sind die elektrischen Leitungen streckenweise durch den Trägerkörper 22 und durch die Öffnung 28 nach außen geführt.

Um mit der Meßvorrichtung gemäß Fig. 1 den Sauerstoffgehalt eines Gases messen zu können, wird zunächst die Heizung 36 in Betrieb genommen und der Festelektrolyt auf eine Betriebstemperatur von mindestens etwa 400 Grad Celsius aufgeheizt. Hierbei wird die Barriere 42 durch Wärmestrahlung des Festelektrolyten 32 und/oder Wärmeleitung über den zweiten Zwischenkörper 40 auf eine Temperatur erwärmt, die zwischen der Temperatur des Festelektrolyten und der Außentemperatur liegt, z. B. auf 200 Grad Celsius. Diese Temperatur ist abhängig vom Abstand zwischen dem Festelektrolyten 32 und der Barriere 42 sowie von der Wärmeleitfähigkeit der Zwischenkörper 30, 40. Nach der Aufheizung der Meßzelle wird über die Zuflußleitung 48 das Meßgas in den Meßgasraum 52 geleitet, überschüssiges Meßgas strömt über die Abflußleitung 50 ab. Gleichzeitig wird an die Elektroden 56, 58 eine elektrische Gleichspannung gelegt, deren Größe ungefähr ein Volt beträgt.

Von dem im Meßgasraum 52 vorhandenem Meßgas tritt ein Teil durch die Barriere 42 in den zweiten Zwischenraum 44 über. Die Barriere 42 wird hierbei durch Diffusion vom Meßgas durchdrungen. Da die Diffusionsstärke von der Temperatur sowie vom physikalischen Aufbau, wie z. B. Porosität, abhängig ist, tritt nur ein bestimmter Anteil des Meßgases in den Zwischenraum 44 über, der bei konstanter Temperatur und unverändert gleichbleibender Beschaffenheit der Barriere konstant ist. Die Elektrode 58, die katalytisch wirksam ist und z. B. aus Platin bestehen kann, ist als Kathode geschaltet. Der Sauerstoff des Meßgases erfährt hier eine Reduktion zu Sauerstoffionen, die den Festelektrolyten durchdringen, zu der Elektrode 56 gelangen und dort wiederum zu Sauerstoffmolekülen oxydiert werden. Der Sauerstoff strömt dann durch den Zwischenraum 34 und die Entlüftungsöffnung 26 in den Außenraum ab. Der für den Transport der Sauerstoffionen durch den Festelektrolyten fließende elektrische Strom wird mit einem nicht dargestellten Strommeßgerät erfaßt.

Durch den Festelektrolyten 32 kann hierbei nur soviel Sauerstoff transportiert werden, wie durch die Barriere 42 infolge der Diffusionsvorgänge in den zweiten Zwischenraum 44 eindringen kann. Somit ist der mit den Sauerstoffionen fließende elektrische Strom von der durch die Barriere 42 diffundierenden Sauerstoffmenge und somit vom Sauerstoffgehalt des Meßgases abhängig. Der fließende elektrische Strom ist daher diffusionsbegrenzt und ein Maß für den Sauerstoffgehalt des Meßgases.

Selbstverständlich müssen die Barriere 42 und der Festelektrolyt 32 derart aufeinander abgestimmt sein, daß sämtlicher in den zweiten Zwischenraum 44 durch Diffusion gelangende Sauerstoff durch den Festelektrolyten abgeführt werden kann.

Der Hauptvorteil der erfindungsgemäßen Meßvorrichtung besteht nun darin, daß einmal die Barriere 42 als gesondertes Bauelement nach dem Entfernen des Deckels 14 und der Herausnahme des Abschlußkörpers 46 leicht ausgetauscht werden kann. Dies kann dann erforderlich sein, wenn die Diffusion der Barriere 42 durch Verschmutzung eingeschränkt oder behindert ist. Auch kann, wenn die Sauerstoffionenleitfähigkeit des Festelektrolyten 32 sich z. B. durch Alterung verringern sollte, die Barriere 42 gegen eine auf die Sauerstoffionenleitfähigkeit des Festelektrolyten abgestimmte Barriere ausgetauscht werden. Da die Heizung 36 durch den Festelektrolyten 32 und den zweiten Zwischenraum 44 von der Barriere 42 getrennt ist, kann diese nur indirekt durch Wärmestrahlung, Leitung (zweiter Zwischenkörper 40) und evtl. Konvektion (Zwischenraum 44) vom Festelektrolyt 32 erwärmt werden, daß heißt, die Barriere 42 weist geringere Temperaturen als der Festelektrolyt auf. Hierdurch ist die Anzahl von Materialien wesentlich erweitert, die für die Herstellung der scheibenförmigen Barriere 42 Verwendung finden können. Insbesondere ist hierdurch der Einsatz von Kunststoffen ermöglicht worden.

Fig. 2 zeigt eine Ausführungsvariante einer elektrochemischen Meßvorrichtung gemäß der Erfindung, mit einem rohrförmigen, einseitig kuppenförmig verschlossenen Festelektrolyten und einer scheibenförmigen Barriere. Im Gehäuse 10 der Meßvorrichtung, das in seinem wesentlichen Aufbau dem Gehäuse 10 der Fig. 1 entspricht, ist ein topfförmiger Grundkörper 66 aus gasdichtem Keramikmaterial mit einem Zentrierrand 68 gelagert. Der Zentrierrand 68 nimmt hierbei die kreisscheibenförmige Barriere 42 und einen ringzylindrischen Distanzkörper 70 aus gasdichtem Keramikmaterial auf. Hierbei ist zwischen der Barriere 42 und dem Boden des Grundkörpers 66 ein Meßgasraum 52 gebildet, an den jeweils eine axial verlaufende Zuflußleitung 48 sowie Abflußleitung 50 angeschlossen ist. Innerhalb des Distanzkörpers 70 ist der zweite Zwischenraum 75 angeordnet.

Am linken Ende des Distanzkörpers 70 ist unter Zwischenschaltung einer Ringdichtung 72 der Flansch 74 des rohrförmiger, am rechten Ende verschlossenen Festelektrolyten 76 koaxial gelagert. Auf dem Flansch 74 stützt sich ein Stempel 78 ab, der ebenfalls aus elektrisch nichtleitendem, gasdichtem Keramikmaterial besteht, und dessen Schaft 80 durch die zentrische Deckelöffnung 54 nach außen geführt ist. Der Schaft 80 ist hierbei von Tellerfedern 64 umgeben, die sich am Deckel 14 des Gehäuses abstützen und die im Inneren des Gehäuses angeordneten Einzelteile gasdicht aufeinander pressen.

Auch hier ist der Festelektrolyt mit Elektroden versehen, die entsprechend dem Vorbild des Ausführungsbeispieles gemäß Fig. 1 nach außen geführt sind.

Im Innenraum des Festelektrolyten 76 ist ein stabförmiger, axial verlaufender elektrischer Heizkörper 82 angeordnet, dessen Anschlußleitungen als gestrichelte Linien dargestellt und nach außen geführt sind.

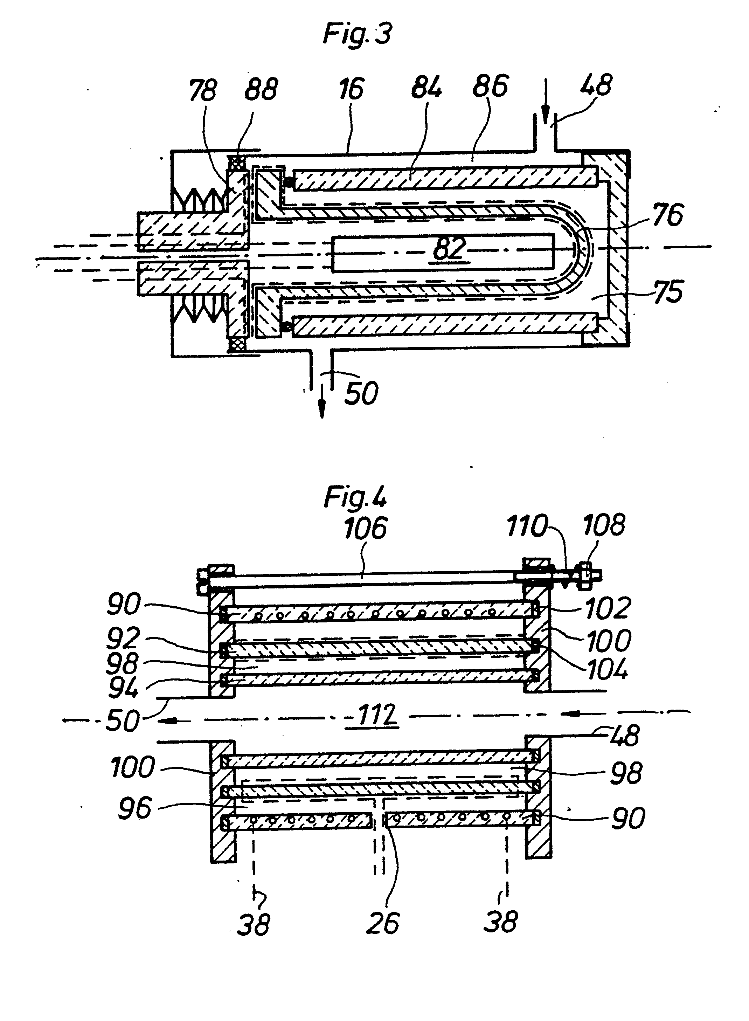

Fig. 3 zeigt eine Ausführungsvariante des Gegenstands der Fig. 2. Der Hauptunterschied besteht darin, daß anstelle einer ebenen scheibenförmiger Barriere 42 hier eine ringzylindrische Barriere 84 verwendet wird, die gleichzeitig als Distanzkörper wirkt. Dieser geänderten Ausführungsform entsprechend ist der Meßgasraum 86 jetzt ringzylindrisch und zwischen der Barriere 84 und dem Unterteil 16 des Gehäuses gebildet. Die Zuflußleitung 48 und die Abflußleitung 50 sind hier am Unterteil 16 in axialer Richtung versetzt angeordnet, so daß eine gute Durchströmung des Meßgasraumes 86 gewährleistet ist. Um ein Eindringen von Außenluft in den Meßgasraum 86 zu vermeiden, ist eine ringförmige Dichtung 88 zwischen dem Flansch des Stempels 78 und der Wand des Unterteils 16 eingefügt.

Da im Ausführungsbeispiel gemäß Fig. 3 die ringzylindrische Barriere 84 als Distanzkörper eingesetzt ist, muß dieser entsprechende Festigkeit aufweisen. Als besonderer Vorteil dieser Ausführungsform ist die im Verhältnis zur Elektrode große Fläche der Barriere 84 zu nennen, so daß für deren Herstellung auch Materialien mit geringer spezifischer Diffusionswirkung eingesetzt werden können oder daß mit geringer Temperatur bereits ausreichende Diffusion erreicht werden kann.

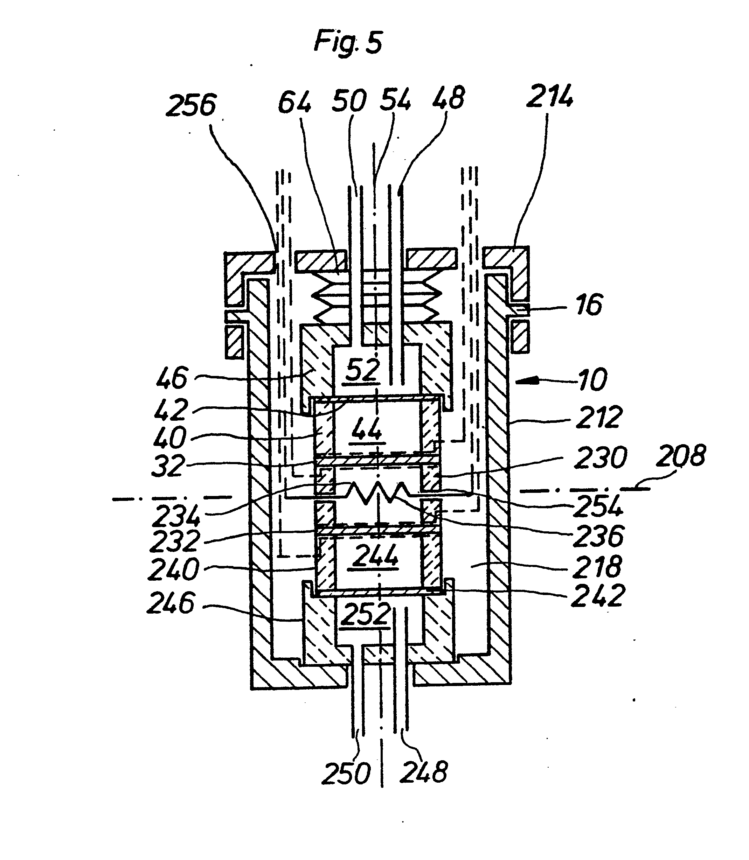

Fig. 4 zeigt schließlich eine elektrochemische Meßvorrichtung gemäß der Erfindung, deren Heizung 90, Festelektrolyt 92 und Barriere 94 ringzylindrisch ausgebildet und konzentrisch ineinander angeordnet sind. Die Heizung 90 besteht aus einem Keramikrohr, in das elektrische Heizdrähte 96 schraubenförmig eingebettet sind, wobei deren Enden mit elektrischen Anschlußleitungen 38 versehen sind. Auch ist eine radial verlaufende Entlüftungsöffnung 26 vorgesehen. Innerhalb der Heizung 90, unter Bildung eines ringzylindrischen Zwischenraumes 96, ist der Festelektrolyt 92, der die Form eines an den Enden offenen Rohres aufweist, angeordnet und in üblicher Weise mit Elektroden und Anschlußleitungen versehen. Innerhalb des Festelektrolyten ist schließlich unter Freilassung des ringzylindrischen zweiten Zwischenraums 98 die ebenfalls rohrförmige Barriere 94 konzentrisch angeordnet. Für den Zusammenhalt der konzentrischen Teile sind diese mit ihren Enden jeweils in einem Abschlußdeckel 100 gelagert, der konzentrische Rillen 102 aufweist, in welchen die zylindrischen Bauteile geführt sind. Zur besseren Abdichtung sind hierbei kreisringförmige Dichtungen 104 eingefügt. Um die Abschlußdeckel gegeneinander zu verspannen und der Meßzelle den erforderlichen Zusammenhalt zu geben, sind an der Peripherie der kreisförmigen Abschlußdeckel 100 wenigstens drei gleichmäßig verteilte Schrauben 106 angeordnet, welche die Deckel miteinander verbinden. In Fig. 4 ist lediglich eine einzige dieser Schrauben 106 dargestellt. Zwischen der Mutter 108 und den zugehörigen Abschlußdeckel 100 ist hierbei jeweils ein Federelement 110, z. B. in Form einer Schraubenoder Tellerfeder eingefügt, um eine axiale Ausdehnungsmöglichkeit der Meßzelle zu ermöglichen.

Der Meßgasraum 112 ist hier vom Innenraum der ringzylindrischen Barriere 94 gebildet, die Zuflußleitung 48 durchdringt zentrisch den einen Abschlußdeckel 100, wogegen der gegenüberliegende andere Deckel mit einer ebenso angeordneten Abflußleitung 50 versehen ist. Als Material für die Abschlußdeckel wird vorzugsweise gasdichtes keramisches, elektrisch nichtleitendes Material verwendet.

Die Meßvorrichtungen sämtlicher Ausführungsbeispiele können in jenen Bereichen, die an den Außenraum grenzen, mit einer Wärmeisolierung versehen sein, um Wärmeverluste gering zu halten bzw. mit geringer Leistung der Heizung ausreichende Betriebstemperaturen erreichen zu können.

In den Ausführungsbeispielen gemäß den Fig. 2 bis 4 wird die Barriere jeweils im wesentlichen durch Strahlungswärme aufgeheizt, die vom Festelektrolyten ausgeht.

In Fig. 5 ist die Anwendung der Erfindung auf eine Meßvorrichtung gezeigt, die für die gleichzeitige Erfassung des Sauerstoffanteils von zwei verschiedenen Meßgasen dient, wobei eines der Meßgase als Referenzgas eingesetzt wird. Solche Meßvorrichtungen sind in der eingangs genannten DE-A-2 946 775 näher beschrieben.

Die Meßvorrichtung gemäß Fig. 5 weist ein Gehäuse mit einem Unterteil 212 und einem Deckel 214 auf, die im Aufbau weitgehend identisch sind mit den entsprechenden Teilen der Fig. 1. Im Innenraum 218 des Gehäuses sind die in Fig. 1 gezeigten und dort näher beschriebenen Bauelemente wie Festelektrolyt 32 mit Elektroden, zweiter Zwischenraum 44, zweiter Zwischenkörper 44, Barriere 42, Meßgasraum 52 und Abschlußkörper 46 mit Zuflußleitung 48 und Abflußleitung 50 in doppelter Ausführung angeordnet, wobei die doppelten Bauelemente spiegelbildlich zu einer strichpunktiert angedeuteten Spiegelebene 208 verlaufen und durch eine vorgesetzte Ziffer "2" gekennzeichnet sind. Demnach sind unterhalbe der Spiegelebene 208 folgende Bauelemente im Innenraum 218 angeordnet: Festelektrolyt 232 mit Elektroden, zweiter Zwischenraum 244, zweiter Zwischenkörper 240, Barriere 242, Meßgasraum 252 sowie Abschlußkörper 246 mit Zuflußleitung 248 und Abflußleitung 250.

Die Spiegelebene 208 verläuft hierbei horizontal in halber Höhe des Zwischenkörpers 230, der den Zwischenraum 234 bildet und der oben und unten von dem Festelektrolyten 32 bzw. 232 verschlossen ist. Die elektrischen Anschlüsse der Heizung 236, die im Zwischenraum 234 angeordnet ist, sind durch radial verlaufende Öffnungen 254, die gleichzeitig zur Entlüftung des Zwischenraums 234 dienen, in den Innenraum 218 und von dort durch Öffnungen 256 des Deckels in den Außenraum geführt. Durch diese Öffnungen 256 sind auch die elektrischen Anschlußleitungen, die zu den Elektroden führen, in den Innenraum 218 geleitet. Der gasdichte Zusammenhalt der einzelnen Bauteile wird entsprechend dem Ausführungsbeispiel nach Fig. 1 durch Tellerfedern 64 erreicht, die sich am Deckel 214 abstützen. Dieser ist leicht lösbar am Unterteil 212 festgelegt. Im übrigen gelten auch hier die Erläuterungen, die zum Ausführungsbeispiel gemäß Fig. 1 gegeben wurden, mit dem Unterschied, daß die Heizung 236 jetzt zwei Meßzellen, je eine oberhalb und eine unterhalb der Spiegelebene 208, aufheizt.

Während des Betriebs der oberen Meßzelle wird, wie im Ausführungsbeispiel nach Fig. 1, das Meßgas zugeführt und der Sauerstoffanteil bestimmt. Gleichzeitig wird die untere Meßzelle durch die Zuflußleitung 248 und die Abflußleitung 250 mit einem Referenzgas von bekanntem Sauerstoffanteil beaufschlagt. Aus den elektrischen Meßsignalen beider Meßzellen kann jetzt durch Quotientenbildung ein neues Signal gebildet und als Meßsignal benutzt werden. Der Vorteil eines solchen Vorgehens liegt darin, daß durch die weitgehend identische Ausbildung und Beheizung der beiden Meßzellen eventuell auftretende Temperaturschwankungen der Meßzellen ohne Einfluß auf das Meßergebnis bleiben.

Für die Dimensionierung der Meßvorrichtung gemäß der Erfindung können folgende Richtwerte gelten:

Der Durchmesser der Barrieren beträgt ungefähr 1 bis 5 cm, vorzugsweise 2 bis 3 cm. Dementsprechend sind die Abmessungen der übrigen Teile zu wählen. Bestehen die Barrieren aus keramischen Material so beträgt die Wandstärke bis ungefähr 6 mm, für Kunststoffe werden Wandstärken zwischen 0,1 und 1 mm gewählt.

Die Zwischenkörper, Abschlußkörper und Abschlußdeckel weisen eine Wandstärke von etwa 3 bis 10 mm auf. Das gasdichte, elektrisch isolierende Material, aus denen diese bestehen, enthält Aluminiumoxid oder Aluminiumsilikate.

Der Festelektrolyt weist jeweils eine Wandstärke von 1 bis 4 mm auf und enthält für Sauerstoffmessung ein sauerstoffionenleitendes Material, z. B. Zirkoniumoxid, das mit Kalziumoxid dotiert ist.

Um die Gasdichtheit zu verbessern, können zwischen den einzelnen Bauelementen gegebenenfalls Dichtungen eingefügt sein.

## Patentansprüche

1. Elektrochemische Meßvorrichtung für die Bestimmung des Sauerstoffgehaltes in Gasen, mit mindestens einem mit einer Heizung (36; 82; 90; 236) versehenen Festelektrolyten (32; 76, 92;

232), der mit Elektroden (56, 58) versehen ist, von denen wenigstens eine Elektrode (58) vom Meßgas beaufschlagbar ist, in dessen Weg wenigstens eine durch die Heizung erwärmbare und durch Diffusion durchdringbare Barriere (42; 84; 94; 242) angeordnet ist, die an einen durch eine Zuflußleitung (48; 248) mit der Meßstelle verbundenen Meßgasraum (52; 86; 112; 252) grenzt und die die Zufuhr des Meßgases zur Elektrode derart begrenzt, daß die Elektrode (58) den gesamten Sauerstoffanteil des Meßgases extrahieren kann, wobei dieser Sauerstoff mit Hilfe eines elektrischen Stromes durch den Festelektrolyten (32; 76; 92; 232) zu einer zweiten Elektrode (56) transportierbar und der hierbei fließende elektrische Strom als Maß für den Sauerstoffgehalt des Meßgases erfaßbar ist, dadurch gekennzeichnet, daß die Barriere (42; 84; 94; 242) als selbständiges Bauelement ausgebildet, leicht austauschbar, durch mindestens den Festelektrolyten (32; 76; 92; 232) sowie mindestens einen zweiten Zwischenraum (44; 75; 98; 244) von der Heizung (38; 82; 90; 236) getrennt und auf eine Temperatur unterhalb der Festelektrolyt-Temperatur, vorzugsweise auf höchstens 300° Celsius, aufheizbar ist.

2. Elektrochemische Meßvorrichtung nach Anspruch 1, dadurch gekennzeichnet, daß die Barriere (42; 84; 94; 242) Keramikmaterial enthält.

3. Elektrochemische Meßvorrichtung nach Anspruch 1, dadurch gekennzeichnet, daß die Barriere (42; 84; 94; 242) im wesentlichen aus Kunststoff, vorzugsweise in Form einer Folie, besteht.

4. Elektrochemische Meßvorrichtung nach Anspruch 3, dadurch gekennzeichnet, daß die Barriere (42; 84; 94; 242) wenigstens ein Material aus der Gruppe Polytetrafluorethylen, Polybutadien, Ethylen-Propylen oder Silikon-Gummi enthält.

5. Elektrochemische Meßvorrichtung nach einem der Ansprüche 1 bis 4, dadurch gekennzeichnet, daß die Barriere (42; 84; 94; 242) aus einer Wand besteht, die auf der einen Seite unter Bildung des zweiten Zwischenraums (44; 75; 98; 244) mit Abstand zum Festelektrolyten (32; 76; 92; 232) verläuft und auf der anderen Seite an den Meßgasraum (52; 86; 112; 252) grenzt.

6. Elektrochemische Meßvorrichtung nach Anspruch 5, dadurch gekennzeichnet dass sie mindestens einen ebenen scheibenförmigen Festelektrolyten aufweist und daß die Barriere (42; 242) ebenfalls eben und scheibenförmig ausgebildet und ungefähr parallel zum Festelektrolyten (32; 232) angeordnet ist.

7. Elektrochemische Meßvorrichtung nach Anspruch 5, dadurch gekennzeichnet dass sie mindestens einen rohrförmigen, an einem Ende kuppenförmig verschlossenen Festelektrolyten aufweist und daß die Barriere (42) eben und scheibenförmig ausgebildet ist und mit axialem Abstand quer zur Kuppe des Festelektrolyten (76) verläuft.

8. Elektrochemische Meßvorrichtung nach Anspruch 5 dadurch gekennzeichnet dass sie mindestens einen rohrförmigen Festelektrolyten, aufweist und daß die Barriere (84;94) rohrförmig ausgebildet und konzentrisch zum Festelektrolyten (76;92) angeordnet ist.

## Claims

1. Electrochemical measuring device for the determination of the oxygen content in gases having at least one solid electrolyte (32; 76; 92; 232) which is provided with a heating element (36; 82; 90; 236), which solid electrolyte is provided with electrodes (56, 58), of which at least one electrode (58) can be impinged upon by the test gas in the path of which there is disposed at least one barrier (42; 82; 94; 242) which is heatable by the heating element and penetrable by diffusion, which borders on a test gas space (52; 86; 112; 252) connected to the measuring point by a feed line (48; 248) and which limits the supply of the test gas to the electrode in such a manner that the electrode (58) can extract the entire oxygen component of the test gas, this oxygen being transportable by means of an electrical current through the solid electrolyte (32; 76; 92; 232) to a second electrode (56) and the electric current flowing in this process being detectable as a measure of the oxygen content, characterized in that the barrier (42; 84; 94; 242) is constructed as an independent component, is easily exchangeable, is separated by at least the solid electrolyte (32; 76; 92; 232) and also at least one second gap (44; 75; 98; 244) from the heating element (36; 82; 90; 236) and is heatable to a temperature below the solid electrolyte temperature, preferably to at most 300° Celsius.

2. Electrochemical measuring device according to Claim 1, characterized in that the barrier (42; 84; 94; 242) contains ceramic material.

3. Electrochemical measuring device according to Claim 1, characterized in that the barrier (42; 84; 94; 242) consists essentially of plastic material, preferably in the form of a film.

4. Electrochemical measuring device according to Claim 3, characterized in that the barrier (42; 84; 94; 242) contains at least one material from the polytetrafluoroethylene, polybutadiene, ethylene-propylene or silicone rubber group.

5. Electrochemical measuring device according to one of the Claims 1 to 4, characterized in that the barrier (42; 84; 94; 242) consists of a wall which, on one side, extends at a distance from the solid electrolyte (32; 76; 92; 232) to form the second gap (44; 75; 98; 244) and, on the other side, borders on the test gas space (52; 86; 112; 252).

6. Electrochemical measuring device according to Claim 5, characterized in that it has at least one flat disc-shaped solid electrolyte, and in that the barrier (42; 242) is also constructed flat and disc-shaped and is disposed approximately parallel to the solid electrolyte (32; 232).

7. Electrochemical measuring device according to Claim 5, characterized in that it has at least one tubular solid electrolyte with a dome-shaped closure at one end, and in that the barrier (42) is constructed flat and disc-shaped and extends at an axial distance transverse to the dome of the solid electrolyte (76).

8. Electrochemical measuring device according to Claim 5, characterized in that it has at least one tubular solid electrolyte and in that the barrier (84; 94) is constructed tubularly and is disposed concentrically with the solid electrolyte (76; 92).

**Revendications**

1. Dispositif de mesure électrochimique pour déterminer la teneur de l'oxygène dans des gaz, comportant au moins un électrolyte solide (32; 76, 92; 232) muni d'un chauffage (36; 82; 90; 236) et d'électrodes (56, 58) dont au moins une (58) est exposée au gaz à mesurer, sur le trajet duquel est agencée au moins une barrière (42; 84; 94; 242) qui peut être échauffée par le chauffage et traversée par diffusion, cette barrière étant adjacente à une chambre de gaz (52; 86; 112; 252), pour le gaz à mesurer, cette chambre étant reliée au point de mesure par une conduite d'arrivée (48; 248), la barrière limitant l'arrivée du gaz à mesurer à l'électrode de façon que cette électrode (58) puisse extraire la totalité de la composante oxygène du gaz à mesurer, cet oxygène pouvant être transporte à une deuxième électrode (56) au travers de l'électrolyte solide (32; 76; 92; 232), à l'aide d'un courant électrique, le courant électrique passant alors étant exploitable comme mesure de la teneur de l'oxygène dans le gaz a mesurer, caractérisé en ce que la barrière (42; 84; 94; 242), réalisée en tant que composant indépendant, facilement remplaçable, est séparée du chauffage (36; 82; 90; 236) par au moins l'électrolyte solide (32; 76; 92; 232) ainsi que par au moins une deuxième chambre intermédiaire (44; 75; 98; 244), et peut être chauffée à une température inférieure à celle de l'électrolyte solide, de préférence à 300° Celsius au maximum.

2. Dispositif de mesure électrochimique selon la revendication 1, caractérisé en ce que la barrière (42; 84; 94; 242) contient de la matière céramique.

3. Dispositif de mesure électrochimique selon la revendication 1, caractérisé en ce que la barrière 103025 (42; 84; 94; 242) est constituée, pour l'essentiel, de matière plastique, de préférence sous la forme d'une

4. Dispositif de mesure électrochimique selon la revendication 3, caractérisé en ce que la barrière (42; 84; 94; 242) comporte au moins une matière du groupe polytétrafluoréthylène, polybutadiène, éthylène-propylène ou caoutchouc silicone.

5. Dispositif de mesure électrochimique selon l'une des revendications 1 à 4, caractérisé en ce que la barrière (42; 84; 94; 242) est constituée par une paroi qui, d'un côté, s'étend à distance de l'électrolyte solide (32; 76; 92; 232) en formant la deuxième chambre intermédiaire (44; 75; 98; 244) et qui, de l'autre côté, délimite la chambre de gaz à mesurer (52; 86; 112; 252).

6. Dispositif de mesure électrochimique selon la revendication 5, caractérisé en ce qu'il présente au moins un électrolyte solide en forme de disque, et en ce que la barrière (42; 42) est, elle aussi, plane et en forme de disque et disposée sensiblement parallèlement à l'électrolyte solide (32; 232).

7. Dispositif de mesure électrochimique selon la revendication 5, caractérisé en ce qu'il présente au moins un electrolyte solide tubulaire fermé à une extrémité en forme de dome, et en ce que la barrière (42) est plane et en forme de disque et s'étend transversalement au dome de l'électrolyte solide (76), à distance axiale de celui-ci.

8. Dispositif de mesure électrochimique selon la revendication 5, caractérisé en ce qu'il présente au moins un électrolyte solide tubulaire, et en ce que la barrière (84; 94) est tubulaire et est agencée concentriquement à l'électrolyte solide (76; 92).

0 071 971

## Fig.1

## Fig.2

## Fig. 3

## Fig. 4

**Fig. 5**